# EUROPÄISCHE PATENTANMELDUNG

(11) **EP 2 801 808 A1**
(43) Veröffentlichungstag der Anmeldung: **12.11.2014**
(21) Anmeldenummer: 13166770.1
(22) Anmeldetag: 07.05.2013
(51) Int. Cl.: G01M 3/20

(54) **Dichtheitsprüfanordnung und Dichtheitsprüfverfahren**

(71) Anmelder: Lüdolph Management GmbH, 27607 Langen (DE)
(72) Erfinder: Lüdolph, Gerald, 27607 Langen (DE); Fuhrmann, Wolfgang, 28865 Lilienthal (DE)
(74) Vertreter: Hansen, Jochen

(57) **Zusammenfassung**

Die Erfindung betrifft eine Dichtheitsprüfanordnung (1) für die Prüfung eines Strukturbauteils (2, 2') oder einer geschlossenen Verpackung / Objekts (2"+21", 2"*) mit einer auf Dichtheit zu prüfenden Wandung, aufweisend: eine Testkammer (3), in der während der Dichtheitsprüfung das Strukturbauteil (2, 2') oder die Verpackung / das Objekt (2"+21 ", 2"*) angeordnet ist, einen Testgasraum (4), der auf einer ersten Seite der Wandung des Strukturbauteils (2, 2') und der Testkammer (3) ausgebildet ist oder der dem Innenraum der Verpackung / des Objekts (2", 2"*) entspricht, einen Prüfraum (5), der auf einer zweiten Seite der Wandung des Strukturbauteils (2, 2') und der Testkammer (3) ausgebildet ist oder zwischen Wandung der Verpackung / Objekts (2"+21 ", 2"*) und der Testkammer (3) ausgebildet ist, eine Testgaszuführung (6) zur Zuführung von Druckluft (DL) und/oder eines Testgases (TG) in den Testgasraum (5), eine Testgasmessanordnung (7) zur Messung oder Detektion des Testgases (TG) in dem Prüfraum (5) mit einem Sensorsystem (72), eine Prüfraum-Vakuumanordnung (51) zur Evakuierung des Prüfraumes (5).

Ferner betrifft die Erfindung ein Dichtheitsprüfverfahren zur Prüfung eines Strukturbauteils (2, 2') oder einer geschlossenen Verpackung / eines Objekts (2"+21 ", 2"*) mit einer erfindungsgemäßen Dichtheitsprüfanordnung (1).

## Beschreibung

Die Erfindung betrifft eine Dichtheitsprüfanordnung für die Prüfung eines Strukturbauteils oder einer geschlossenen Verpackung bzw. eines geschlossenen Objektes oder Bauteils mit einer auf Dichtheit zu prüfenden Wandung, aufweisend: eine Testkammer, in der während der Dichtheitsprüfung das Strukturbauteil oder die Verpackung, das geschlossene Objekt oder Bauteil angeordnet ist, einen Testgasraum, der auf einer ersten Seite der Wandung des Strukturbauteils und der Testkammer ausgebildet ist oder der dem Innenraum der Verpackung, des geschlossenen Objektes oder Bauteils entspricht, einen Prüfraum, der auf einer zweiten Seite der Wandung des Strukturbauteils und der Testkammer ausgebildet ist oder zwischen Wandung der Verpackung, des geschlossenen Objektes oder Bauteils und der Testkammer ausgebildet ist, eine Testgaszuführung zur Zuführung von Druckluft und/oder eines Testgases in den Testgasraum, eine Testgasmessanordnung zur Messung oder Detektion des Testgases in dem Prüfraum mit einem Sensorsystem, eine Prüfraum-Vakuumanordnung zur Evakuierung des Prüfraumes.

Ferner betrifft die Erfindung ein Dichtheitsprüfverfahren zur Prüfung eines Strukturbauteils oder einer geschlossenen Verpackung, eines geschlossenen Objektes oder Bauteils mit einer erfindungsgemäßen Dichtheitsprüfanordnung.

Eine Dichtheitsprüfung ist physikalisch gesehen eine Messung der Leckrate, wobei die Dichtheit eines zu prüfenden Objektes unterhalb einer vorgebbaren Leckrate gegeben ist und oberhalb einer vorgegebenen Leckrate die Dichtheit eines zu prüfenden Objektes nicht mehr gegeben ist.

Aus dem Stand der Technik sind unterschiedliche Dichtheitsprüfanordnungen bekannt, um eine industrielle Dichtheitsprüfung von Strukturbauteilen mit einer ersten Seite und einer zweiten Seite durchzuführen, wobei die Dichtheit zwischen der ersten Seite und der zweiten Seite zu prüfen ist. Derartige industrielle Dichtheitsprüfungen werden in der Massenproduktion von Autofelgen, insbesondere Aluminiumrädern, Kälteleitungen, Druck- und Saugleitungen, Wärmetauschern, wie Kühlern und dgl., Pumpengehäusen, Stoßdämpfern sowie Federbeinen und Dämpfern, Kraftstofftanks, Ventilen, Motoren, Armaturen, Leuchtmitteln und dgl., als auch in der Arzneimittelindustrie für Blisterverpackungen, Dosiersprays oder Langzeit-Medikamentverpackungen durchgeführt. Die zuvor aufgeführten Anwendungsbeispiele sind hierbei nicht abschließend zu sehen. Insbesondere ist der Bereich der Luftfahrt-Bauteile-Prüfung ein sehr großes Segment der Dichtheitsprüfung, wobei hier die unterschiedlichsten Bauteile auf Dichtheit geprüft werden können.

Im Bereich der industriellen Dichtheitsprüfung für Aluminiumräder wird praktisch ausnahmslos in entsprechenden Dichtheitsprüfanordnungen eine Dichtheitsprüfung der Aluminiumräder mittels eines Massenspektrometers und dem Testgas Helium durchgeführt. Für die Dichtheitsprüfung einer Autofelge wird der Prüfling produktionsseitig über Fördersysteme der Dichtheitsprüfanordnung zugeführt und über ein Handlingsystem wird der Prüfling innerhalb einer Testkammer der Dichtheitsprüfanordnung positioniert.

Nach der richtigen Positionierung wird die Autofelge, dies können auch Stahlfelgen oder neuartige Carbonfelgen sein, derart abgedichtet, dass die Wandung zwischen dem Innen- und Außenbereich der Autofelge, also die Trennwand bzw. Aufnahme für den später aufzubringenden Reifenmantel, auf Dichtheit prüfbar ist. Nunmehr erfolgt zunächst eine Evakuierung der Räume sowohl auf der Innenseite als auch auf der Außenseite der Autofelge.

Im Anschluss erfolgt eine Druckbeaufschlagung mit einem Testgas auf der einen Seite der Autofelge, bevorzugt der Außenseite, wobei auf der anderen Seite das Vakuum gehalten wird und nach Erreichen des vorbestimmten Druckes eine Ventilschaltung geöffnet wird, so dass eine Gasprobe aus dem Innenraum der Autofelge entnommen werden kann, die im Anschluss dahin gehend geprüft wird, ob das Testgas die Wandung durchdrungen hat und somit Testgas auf der Vakuumseite detektierbar ist. Diese Prüfung wird durch ein Massenspektrometer durchgeführt, wobei die Probe auf definierte Anteile von Helium, die aus einem evtl. vorhandenen Leck in der Wandung der Autofelge durchgetreten sind, untersucht wird.

Über einen entsprechend vorgegebenen Grenzwert erfolgt dann die Sortierung nach Autofelgen, die die notwendige Dichtheit aufweisen und jenen die Undichtigkeiten aufweisen.

Nach der durchgeführten Dichtheitsmessung wird das Testgas Helium entspannt, rückgewonnen und sämtliche Prüfräume werden im Anschluss belüftet. Anschließend erfolgt die Öffnung der Testkammer und es wird ein Radwechsel automatisiert durchgeführt.

Problematisch an denen im Stand der Technik bekannten Dichtheitsprüfanordnungen zur Prüfung von Strukturbauteilen und geschlossenen Verpackungen sowie geschlossenen Bauteilen auf Dichtheit sind die Dauer der Messung sowie eine etwaige Testgasverseuchung der Dichtheitsprüfanordnung durch ein undichtes Strukturbauteil oder einen Mixbetrieb bei der Dichtheitsmessung von unterschiedlich großen zu prüfenden Elementen als auch insbesondere der hohe Testgasverbrauch an Helium zur Durchführung der Dichtheitsprüfung.

Die Testgasverseuchung durch eine Undichtigkeit in dem Strukturbauteil führt bei den empfindlichen Massenspektrometerprüfmethoden zu erheblichen Testverzögerungen bzw. zu Fehl- bzw. Falschmessungen, insbesondere zu einem Pseudoausschuss und scheint generell nicht beseitigbar zu sein.

Bei einer Aluminiumradprüfung mit den heute im Stand der Technik bekannten Dichtheitsprüfanordnungen wird pro Dichtheitsprüfung auch unter Einsatz einer Testgasrückgewinnung ca. 0,5 bis 4 l Helium unter Normaldruckbedingungen verbraucht. Dies führt bei einer durchschnittlichen Jahresproduktion von 15 Mio. Räder pro Jahr eines einzigen Herstellerbetriebes zu erheblichen Kosten. Die Kosten belaufen sich auf mehrere 100 T € allein für das Heliumtestgas. Zudem zeichnet sich eine Verknappung des Heliumvorkommens ab, was zu Lieferengpässen durch Verknappung führen wird.

Weiterhin stellt die Testgasrückgewinnung zur Rückgewinnung des Heliums ebenfalls einen erheblichen Kostenfaktor dar, der möglichst gering gehalten bzw. auf den bevorzugt vollständig verzichtet werden sollte.

Der vorliegenden Erfindung liegt die Aufgabe zugrunde, eine Dichtheitsprüfanordnung sowie ein Dichtheitsprüfverfahren aufzuzeigen, die es ermöglichen, den Verbrauch an Testgas erheblich zu reduzieren, eine Vielzahl an Messungen innerhalb eines Prüfvorganges zu ermöglichen und auf diese Art und Weise die Wirtschaftlichkeit einer Dichtheitsprüfanordnung zu erhöhen und insgesamt die Zeit für die tatsächliche Messung bzw. Probennahme und anschließende Auswertung deutlich zu reduzieren.

Gelöst wird diese Aufgabe mit einer Dichtheitsprüfanordnung nach Anspruch 1 sowie einem Dichtheitsprüfverfahren nach Anspruch 11.

Dadurch, dass die Testgasmessanordnung zwischen dem Prüfraum und dem Sensorsystem eine Probenstufe mit einer Zwischenkammer, einem zwischen der Zwischenkammer und dem Prüfraum angeordneten Prüfraum-seitigen Ventil, einem zwischen der Zwischenkammer und dem Sensorsystem angeordneten Sensorsystem-seitigen Ventil, einer an die Zwischenkammer angeschlossene Vakuumanordnung zur Evakuierung der Zwischenkammer und einem zwischen der Zwischenkammer und der Vakuumanordnung angeordneten Vakuumanordnung-seitigen Ventil aufweist, ist es zum einen möglich, ein hochempfindliches Messinstrument zur Testgasdetektion als Sensorsystem zu verwenden und zum anderen die Zeit für den Messvorgang zu reduzieren, da die Messung noch weiter geführt werden kann, obwohl die Testkammer bereits wieder entspannt und belüftet wird, wodurch insgesamt ein deutlich reduzierter Testgasverbrauch gegenüber dem bisherigen Stand der Technik gegeben ist und die Taktzeiten trotz einer wesentlich empfindlicheren Messung gleich bleibend sind bzw. sogar reduziert werden können, was letztendlich einem höheren Durchsatz gleich kommt.

Mittels der hintereinander geschalteten und in Richtung des Sensorsystems immer geringere Drücke aufweisenden Kammer bzw. Probenabschnitte sowie einer dazugehörigen verfahrensgemäßen Ansteuerung der entsprechenden Ventile ist es durch den sich zwischen den hintereinander geschalteten Stufen ausbildenden Differenzdruckausgleich möglich, die Gasprobe einem hoch sensitiven Sensorsystem zuzuführen. Bei den hintereinander geschalteten Stufen erfolgt eine Reduzierung der Drücke um mehrere Dekaden, so dass von dem anfänglichen Druck des Prüfraums, nämlich einem sehr einfachen Feinvakuum im Bereich von 1 bis 10⁻³ mbar, über das Hochvakuum im Bereich von 10⁻³ mbar bis 10⁻⁶ mbar innerhalb der Probenstufe, bis hin zum Hoch- bis Ultrahochvakuum im Bereich von 10⁻⁴ mbar bis 10⁻⁷ mbar, der Druck der Probe aus dem Prüfraum abnimmt ohne dabei die Probenzusammensetzung wesentlich zu ändern.

Zudem ist mit Hilfe dieser Dichtheitsprüfanordnung eine schnelle Messung möglich, wobei sofort nach der ersten Gasprobennahme in die Zwischenkammer die Testkammer wieder entspannt und belüftet werden kann und ein neues Strukturbauteil bzw. eine geschlossene Verpackung bzw. Bauteil zur Prüfung vorgelegt werden kann.

Die Messempfindlichkeit der Dichtheitsprüfanordnung wird auf Grund der Möglichkeit bessere Sensorsysteme anzuschließen etwa um den Faktor 1000 erhöht, was dazu führt, dass etwa nur ein hundertstel bzw. bis zu einem tausendstel der ursprünglich benötigten Testgasmenge für die Durchführung der Dichtheitsprüfung notwendig ist. Insbesondere seien hier Quadrupol-Massenspektrometer genannt, wobei auch vergleichbare Spektrometer und Sensoren verwendet werden können.

Das Volumen der Zwischenkammer korreliert mit der Größe des Prüfraumes, wobei das Volumen der Zwischenkammer im Bereich von 1 bis 1000 cm³, insbesondere im Bereich von 1 bis 150 cm³ liegt. Die Größe der Zwischenkammer ist den Gegebenheiten entsprechend anzupassen, um die notwendige minimale Taktzeit zu realisieren, wobei die Zwischenkammer nicht zu groß aber auch nicht zu klein gewählt werden darf. Insbesondere spielen bei der Größenbestimmung die Leckrate, der Takt sowie die Druckverhältnisse eine wichtige Rolle.

Das Sensorsystem weist ein Massenspektrometer, insbesondere ein Quadrupol-Massenspektrometer und/oder mindestens zwei einzelne Testgassensoren auf, wobei das Sensorsystem der Testgasmessanordnung in einer besonders bevorzugten Ausführung mindestens zwei Testgase detektieren kann.

Ein Quadrupol-Massenspektrometer ist ein "Partialdruckmessgerät" für das Hochvakuum bzw. Ultrahochvakuum und ist in einer kostengünstigen Variante als Restgasanalysator erhältlich. Quadrupol-Massenspektrometer sind der häufigste Massenspektrometer-Typ, da die Geräte kompakt und kostengünstig gebaut werden können. Quadrupole sind außerdem schnell genug, um eine schnelle Restgasanalyse durchführen zu können. Gerade in der automatisierten Dichtheitsprüfung ist der Zeitfaktor von besonderer Bedeutung.

Das Quadrupol-Massenspektrometer stellt für diese Aufgabenbereiche einen guten Kompromiss aus Leistungsfähigkeit, Platzaufwand und Anschaffungskosten dar, da hier die Eigenschaften, wie beispielsweise die einfache Art des Scannens über den gesamten Massebereich, die hohe Empfindlichkeit, die hohe Mess- und Wiederholungsrate sowie der große Messbereich (bis zu 10 Dekaden) und die Kompatibilität zu den allgemeinen vakuumtechnischen Anforderungen wie kleine Abmaße, beliebige Einbauposition und geringe Eigengasabgabe, besonders zum Tragen kommen.

Durch diese im Nachhinein recht einfache Konstruktion und Verbindung eines Quadrupol-Massenspektrometers mit einer Probenstufe mittels Differenzdruckmethode kann nunmehr der Testgasverbrauch erheblich gesenkt werden, da die Detektionsempfindlichkeit drastisch erhöht wird, wodurch insgesamt sich die Kosten, die für die Vorhaltung von Helium als Testgas notwendig sind, um den Faktor 100 bis 1.000 reduzieren lassen.

Der besondere Aspekt, warum diese Kombination aus Probenstufe und Quadrupol-Massenspektrometer hier generell anwendbar ist, ist die Nichtveränderung der Gaszusammensetzung. Das Gas, welches aus dem Prüfraum der Testkammer der Dichtheitsprüfanordnung probenmäßig entnommen wird, wird in dessen Gaszusammensetzung nicht geändert, sondern lediglich in dessen Druck erheblich reduziert und dem Quadrupol-Massenspektrometer zur Analyse zugeführt.

In einer einfachen Ausgestaltung können einfache Sensoren zur Detektion eines Testgases bzw. dessen Konzentration in der Luft verwendet werden. Bevorzugt können jedoch Sensorsysteme verwendet werden, die zwei oder mehr Testgase detektieren können.

In einer bevorzugten Ausführungsvariante sind alle Vakuum-/ Druckleitungen sehr kurz gehalten, um Prozesszeiten sehr kurz zu halten. Selbstverständlich sind die Volumina der Ventile und der Leitungen entsprechend zu berücksichtigen. Die Vakuumanordnung ist eine Membranpumpe, eine Drehschieberpumpe, und/oder eine Turbomolekularpumpe.

Durch eine Membranpumpe kann kostengünstig und höchst effizient das Vakuum für eine im Anschluss stattfindende Teilübertragung über die Druckdifferenz einer gezogenen Probe realisiert werden, damit im Anschluss die aus der Testkammer stammende Gasprobe zunächst in deren Druck, aber nicht in deren Zusammensetzung verändert und im Anschluss weiter an das Sensorsystem ebenfalls über die Druckdifferenz weiter gegeben wird, wobei die Gasprobe sodann im Sensorsystem analysiert werden kann.

Selbstverständlich kann das System der Probenstufe auch mehrfach hintereinander angewendet werden, wodurch eine mehrstufige Druckreduzierung erfolgt, jedoch sich die Gaszusammensetzung nicht ändert. Insbesondere können auf diese Weise die Probleme einer üblichen Drossel, nämlich Probleme durch Verschmutzung, den langsamen Gasdurchsatz sowie insbesondere die sich ändernde Gaszusammensetzung der gezogenen Probe, ausgeschlossen werden.

Zwischen dem Sensorsystem-seitigen Ventil der Zwischenkammer und dem Sensorsystem kann ergänzend mindestens eine Vakuumerhöhungsstufe angeordnet sein, wobei der Druck der im Sensorsystem zu untersuchenden Gasprobe des Prüfraumes weiter verringert wird.

Eine weitere sich ergebende Teil-Aufgabe der Erfindung ist die Verhinderung, dass eine Testgasverseuchungen einen erhöhten Pseudoausschuss verursacht, wodurch erhebliche wirtschaftliche Nachteile entstehen. Diese Aufgabe ist insbesondere im Nachgang zu den bisherigen Ausführungen zu sehen, bzw. wird erst durch eine entsprechende Dichtheitsprüfanordnung mit den zuvor genannten Aspekten möglich.

Gelöst wird die zuvor aufgezeigte weitere Teil-Aufgabe dadurch, dass die Testgaszuführung mit mindestens zwei unterschiedlichen Testgasen beaufschlagbar ist, wobei entweder das erste Testgas, das zweite Testgas oder eine Kombination aus dem ersten und dem zweiten Testgas nutzbar ist, wobei die Testgase bevorzugt Wasserstoff (H²), besonders bevorzugt als Formiergas, Helium (HE) und/oder Kohlenstoffdioxid (CO²) sind. Hierbei ist deren einfache und kostengünstige Verfügbarkeit der wichtigste und ausschlaggebende Aspekt. Selbstverständlich können auch andere Gase verwendet werden. Es sei noch angemerkt, dass bei Verwendung von Formiergas keinerlei Probleme in Bezug auf eine mögliche Explosionsgefahr bestehen. Die Wasserstoffkonzentration innerhalb eines Druckluft-Testgas-Gemisches mit Basis von Formiergas kann auf Grund der Verwendung eines Quadrupol-Massenspektrometers derart gering gehalten werden, dass sich durch Verwendung von Formiergas keinerlei Probleme ergeben.

Die Testgaszuführung weist mindestens drei einzelne Einbringmittel auf, die direkt in den Testgasraum eindringend angeordnet sind, wobei ein erstes Einbringmittel mit Druckluft, ein zweites Einbringmittel mit einem ersten Testgas und ein drittes Einbringmittel mit einem zweiten Testgas beaufschlagbar ist. Hierdurch erfolgt zum einen eine optimale Durchmischung des Testgasdruckluftgemisches innerhalb des Testgasraumes und weiter erfolgt eine sehr gute Regelung und Dosierung der Testgasmenge. Insbesondere kann der Einfüllvorgang während des Tests sehr fein und zudem auch dynamisch dosiert werden, so dass bereits bei einem kleinen Testgasdruck eine empfindliche Grobleckmessung vorgenommen werden kann, um eine Testgasverseuchung bei sehr hohem Testgasdruck zu vermeiden. Das Mischungsverhältnis von Testgas zu Druckluft ist ca. um den Faktor 100 bis 1000 kleiner als das bisherige Mischungsverhältnis von im Stand der Technik bekannten Dichtheitsprüfanordnungen, so dass der Verbrauch an teurem Testgas stark reduziert werden kann.

Diesbezüglich kann eine erste frühe Testgasmessung durch eine kleine Probe am Anfang des Testgasmischvorganges erfolgen, so dass das Sensorsystem, beispielsweise ein Quadrupol-Massenspektrometer bereits frühzeitig eine Grobleckage detektieren kann. Sollte bereits zu Beginn der Grobleckage-Messung ein Leck detektiert werden, kann der weitere Prüfvorgang sofort beendet werden, wodurch Testgas eingespart wird.

Sollte eine Testgasverseuchung der Dichtheitsprüfanordnung durch ein undichtes Strukturbauteil erfolgt sein, so könnte einfach bei der nächsten Messung durch entsprechend angesteuerte Steuerventile auf das zweite Testgas umgeschaltet werden, das dann wiederum durch das Sensorsystem, aufgrund dessen breiten Messbereiches, detektiert werden kann. Die Nutzung des zweiten Testgases erfolgt lediglich so lange, bis die Verseuchung mit dem ersten Testgas nicht mehr im Untergrund zu detektieren ist. Dies kann beispielsweise besonders interessant sein, wenn man ein erstes günstiges Testgas und ein zweites teureres Testgas verwendet.

Das Dichtheitsprüfverfahren für die Prüfung eines Strukturbauteils oder einer geschlossen Verpackung bzw. eines geschlossen Objekts mit einer zuvor dargestellten Dichtheitsprüfanordnung umfasst die Schritte:
1) Evakuieren der Zwischenkammer bei geschlossenem Prüfraum-seitigen Ventil und Sensor-seitigen Ventil durch die Vakuumanordnung bei geöffnetem Vakuumanordnung-seitigen Ventil,
   wobei in zeitlicher Überschneidung hierzu erfolgt:
2A) im Falle der Dichtheitsprüfung einer Wandung eines Strukturbauteils:
   a) Positionieren des Strukturbauteils bei offener Testkammer;
   b) Schließen der Testkammer und Abdichten des Strukturbauteils, so dass sich der Testgasraum und der Prüfraum ausbilden;
   c) Evakuieren des Prüfraums und des Testgasraums;
   d) Mischen und Einleiten eines Gasgemisches umfassend Druckluft und/oder ein Testgas in den Testgasraum;
   oder
2B) im Falle der Dichtheitsprüfung einer geschlossenen Verpackung / eines geschlossenen Objekts:
   a) Vorbereiten des Testgasraumes durch Befüllen des Innenraumes der geschlossenen Verpackung / Objekts als Testgasraum mit Druckluft und/oder Testgas
   b) Positionieren der geschlossenen und mit Druckluft und/oder Testgas befüllten Verpackung / Objekts bei offener Testkammer;
   c) Schließen der Testkammer, so dass sich der Prüfraum ausbildet;
   d) Evakuieren des Prüfraums;
3) Schließen des Vakuumanordnung-seitigen Ventils und anschließendes Ziehen einer Probe aus dem Prüfraum über das Druckgefälle eines Teils der Gasprobe durch kurzzeitiges Öffnen und anschließendes Schließen des Prüfraum-seitigen Ventils;
4)
   a) Freigeben eines Teils der oder der in der Zwischenkammer befindlichen Gasprobe des Prüfraumes (5) an das Sensorsystem über das Druckgefälle durch Öffnen des Sensorsystem-seitigen Ventils während des Analysierens der Gasprobe durch das Sensorsystem und Bewertung der Dichtheit des Strukturbauteils oder der geschlossenen Verpackung /Objekts;
      und
   b) in zeitlicher Überschneidung Belüften der Testkammer zur Neubestückung mit dem nächsten Strukturbauteil durch Entfernen des Strukturbauteils oder der geschlossenen Verpackung / Objekts.

Die Öffnungszeit des Prüfraum-seitigen Ventils [ Schritt 3 ] und/oder des Sensorsystem-seitigen Ventils [ Schritt 4)a) ] durch kurzzeitiges Öffnen und anschließendes Schließen liegt im Bereich von 0,1 bis 9 Sekunden, insbesondere beträgt die Öffnungszeit 0,5 bis 2 Sekunden, da durch dieses kurze Öffnen nur eine sehr begrenzte Menge der Gasprobe durch den Druckdiffenrenzausgleich überführt wird.

Nach dem Verfahrensschritt 2A) c) oder 2B) d) kann zunächst das Schließen des Vakuumanordnung-seitigen Ventils und anschließend das Ziehen einer Probe aus dem Prüfraum durch kurzzeitiges Öffnen und anschließendes Schließen des Prüfraum-seitigen Ventils erfolgen [ Schritt 3 ], wobei im Anschluss durch Freigeben eines Teils der oder der in der Zwischenkammer befindlichen Gasprobe des Prüfraumes an das Sensorsystem über das Druckgefälle durch Öffnen des Sensorsystem-seitigen Ventils [ Schritt 4)a) ] eine Gasanalyse der Gasprobe aus dem Prüfraum durch das Sensorsystem auf Verseuchung mit dem Testgas aus der vorherig durchgeführten Dichtheitsprüfung untersucht wird, wobei bei der Detektion einer Verseuchung des Prüfraumes mit dem ersten Testgas eine Umschaltung der Testgaszuführung auf ein zweites Testgas oder eine Kombination aus dem ersten und zweiten Testgas erfolgt. Es erfolgt somit eine Untersuchung des Untergrundes, wodurch zudem auch eine Kalibrierung realisiert werden kann, die immer von der aktuellen Testatmosphäre abhängig ist und bei der Gasprobenbewertung einbezogen werden kann.

Nach dem Wechsel des Testgases bei einer Testgasverseuchung der Testkammer wird das erste Testgas weiterhin detektiert, wobei bei Unterschreitung einer Verseuchungsgrenze des ersten Testgases erneut auf das erste Testgas umgeschaltet wird. Hierbei können insbesondere kostengünstige Testgase bevorzugt verwendet werden.

Das Mischen und Einleiten des Testgases und der Druckluft in den Testgasraum kann gleichzeitig von Anfang an erfolgen oder aber zeitlich versetzt, wobei zunächst die Druckluft und im Anschluss oder im letzten Drittel der Drucklufteinbringung das Testgas in den Testgasraum eingebracht wird. Hierbei ist es wichtig, dass während der Testgaseinbringung das Testgas ausreichend gut innerhalb des Testgasraumes verteilt wird.

Während der Prüfung auf eine Testgasverseuchung könnte eine Kalibrierung des Untergrundes im Prüfraum erfolgen, wobei die weiteren Auswertungen der Prüfraumproben in Bezug auf eine Undichtigkeit des Strukturbauteils unter Berücksichtigung der Kalibrierung erfolgen. Hierdurch wird die relative Prüfgenauigkeit nochmals deutlich erhöht.

Die Druckluft wird aus der vorhandenen Umgebungsluft erzeugt und ist für die Nutzung als Testgas in Verbindung mit einem Quadrupol-Massenspektrometer möglich.

Nachfolgend werden Ausführungsbeispiele der Erfindung anhand der beiliegenden Zeichnung detailliert beschrieben.

Darin zeigen:
- Fig. 1: eine schematische Darstellung eines Ausführungsbeispiels der erfindungsgemäßen Dichtheitsprüfanordnung am Beispiel eines Aluminiumrades;
- Fig. 2: eine schematische Darstellung eines weiteren Ausführungs- und Anwendungsbeispiels der erfindungsgemäßen Dichtheitsprüfanordnung am Beispiel eines Kühlers bzw. Wärmetauschers und
- Fig. 3a, 3b: eine schematische Darstellung eines weiteren Ausführungs- und Anwendungsbeispiels der erfindungsgemäßen Dichtheitsprüfanordnung am Beispiel eines Fasses, das samt einem zum spezifischen Fass dazugehörigen Deckel auf Dichtheit geprüft werden soll, wobei zunächst das Fass gefüllt (Fig. 3a) und anschließend auf Dichtheit geprüft (Fig. 3b) wird.
- Fig. 4a, 4b: eine schematische Darstellung eines weiteren Ausführungs- und Anwendungsbeispiels der erfindungsgemäßen Dichtheitsprüfanordnung am Beispiel eines Fasses, das samt einem zum spezifischen Fass dazugehörigen Deckel auf Dichtheit geprüft werden soll, wobei zunächst Fässer mit unterschiedlichen Testgasen gefüllt werden (Fig. 3a) und anschließend auf Dichtheit geprüft (Fig. 3b) werden, wobei die Fässer in Abhängigkeit einer etwaigen Verseuchung der Anlage zugeführt werden.

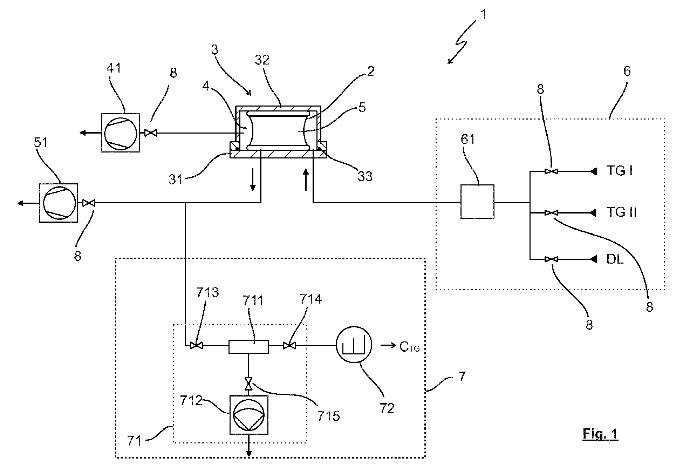

In Fig. 1 ist eine schematische Darstellung eines ersten Ausführungsbeispiels der erfindungsgemäßen Dichtheitsprüfanordnung 1 am Beispiel eines Aluminiumrades 2 dargestellt.

Die Dichtheitsprüfanordnung 1 besteht aus einer Testkammer 3, einer Testgaszuführung 6 sowie einer Testgasmessanordnung 7. Weiter sind noch Vakuumanordnungen 41 und 51 vorgesehen.

Innerhalb der Testkammer 3 wird das Strukturbauteil / die Autofelge 2 auf einer unteren Dichtplatte 31 automatisiert aufgesetzt. Im Anschluss daran wird die Testkammer 3 mittels der oberen Dichthülle 32, die auf die untere Dichtplatte 31 aufgesetzt und mit Dichtungen 33 abgedichtet wird, verschlossen. Hierbei bildet sich ein Testgasraum 4 und ein Prüfraum 5 aus.

Der Testgasraum 4 ist zwischen der Testkammer 3 und der Autofelge 2 realisiert, wobei dies im Wesentlichen dem späteren auf die Autofelge 2 aufzusetzenden Reifenmantel entspricht.

Der Prüfraum 5 ist zwischen der unteren Dichtplatte 31 und dem oberen Teil der oberen Dichthülle 32 ausgebildet, wobei dies dem Innenraum der Autofelge 2 entspricht.

Die auf Dichtheit zu prüfende Wandung der Autofelge 2 ist somit auf der einen Seite durch den Prüfraum 5 und auf der anderen Seite durch den Testgasraum 4 begrenzt.

Die Testgaszuführung 6 weist mindestens zwei Testgasversorgungen auf, nämlich erstes Testgas TG I, beispielsweise Helium, und zweites Testgas TG II, beispielsweise Wasserstoff oder Kohlenstoffdioxid. Ferner weist die Testgaszuführung 6 noch eine Druckluftversorgung DL auf.

Die Druckluft und das Testgas können entweder, wie hier dargestellt, in einer Testgas-/Druckluft-Gasmischanordnung 61 vorgemischt und in den Testgasraum 4 bereits vorgemischt eingebracht werden oder mittels einzelner Zuleitungen und entsprechenden Düsen erst im Testgasraum 4 miteinander vermischt werden, wobei hier das Vermischen dynamisch ablaufen könnte, wobei bereits bei einer frühen Leckdetektion ein unnötiger weiterer Testgasverbrauch vermieden werden könnte.

Die Testgasmessanordnung 7 weist eine Probenstufe 71 sowie ein Sensorsystem, in diesem Ausführungsbeispiel ein Quadrupol-Massenspektrometer 72 auf.

Die Probenstufe 71 besteht aus einer Zwischenkammer 711 und einer Vakuumanordnung, insbesondere einer Membranpumpe 712, die die Zwischenkammer 711 bis in den Bereich eines Hochvakuums evakuiert. Hierzu sind weiter ein Prüfraum-seitiges Ventil 713 sowie ein Sensorsystem-seitiges Ventil 714 vorgesehen, die die Zwischenkammer 711 entsprechend einerseits von dem Quadrupol-Massenspektrometer 72 und andererseits von dem Prüfraum 5 absperren, während die Zwischenkammer 711 evakuiert wird.

Ferner sind in der gesamten Anordnung weitere steuerbare Ventile 8 vorgesehen.

An dieser Stelle wird darauf hingewiesen, dass es sich um eine abstrahierte Prinzipdarstellung eines Ausführungsbeispiels des erfindungsgemäßen Aufbaus der Dichtheitsprüfanordnung 1 handelt, in der die im Stand der Technik bekannten notwendigen Vakuumanordnungen, nämlich insbesondere Testgasraum-Vakuumanordnung 41 als auch Prüfraum-Vakuumanordnung 51 nicht weiter detailliert beschrieben sind, gleichwohl selbstverständlich entsprechend ausgebildet sind. Beispielsweise können hierzu mehrere gleichartige als auch unterschiedliche Vakuumpumpentypen miteinander zusammenwirken oder stufenweise nacheinander geschaltet sein, um ein entsprechend notwendiges Vakuum erzeugen zu können bzw. den Testgasraum 4 sowie den Prüfraum 5 entsprechend zu evakuieren.

Zur Dichtheitsprüfung der auf Dichtheit zu prüfenden Autofelge 2, die sich in der Testkammer 3 befindet, erfolgt zunächst nach dem Einbringen der Autofelge 2 in die Testkammer 3 und dem Schließen der Testkammer 3 das Evakuieren des Testgasraums 4 über die Testgasraumvakuumanordnung 41 und des Prüfraumes 5 über die Prüfraumvakuumanordnung 51. Das Evakuieren der Räume erfolgt in etwa bis in den Bereich 10⁻¹ mbar. Im Anschluss an das Evakuieren wird in den Testgasraum 4 über die Testgaszuführung 6 ein erstes Testgas TG I in Kombination mit Druckluft DL eingebracht.

Nunmehr erfolgt eine Probeentnahme aus dem Prüfraum 5, die dann der Zwischenkammer 711 durch kurzzeitiges Öffnen und anschließendes Schließen des Prüfraum-seitigen Ventils 713 zugeführt wird, wobei das Vakuumanordnungseitige Ventil 715 geschlossen ist. Dies erfolgt durch die Diffenrenzdruckübertragung, da in das Vakuum in der Zwischenkammer um den Faktor 100 bis 1000 besser ist als das Vakuum in dem Prüfraum 5.

Nachdem nunmehr der Druck in der Zwischenkammer 711 leicht angestiegen ist, bedingt durch das Eindringen der Gasprobe aus dem Prüfraum, kann nunmehr die in deren Gaszusammensetzung unveränderte Probe des Prüfraumes 5 durch Öffnen des Sensorsystem- / Quadrupol-Massenspektrometer-seitigen Ventiles 714 dem Quadrupol-Massenspektrometer 72 zur Analyse zugeführt werden, wobei hier ebenfalls die Übertragung auf Grund der Differenzdruckmethode erfolgt, da der im Bereich des Sensorsystems 72 vorherrschende Druck nochmals niedriger ist als der Druck der Zwischenkammer.

Und auch dieses mal wird nicht der gesamte Inhalt der Zwischenkammer 711 in den Sensorsystembereich übergeleitet, sondern vielmehr nur ein Bruchteil der Gasprobe durch kurzzeitiges Öffnen und anschließendes Schließen des Sensorsystem-seitigen Ventils 714 in das Sensorsystem 72 übergeleitet, wobei sich erneut dessen Zusammensetzung nicht ändert.

Das Quadrupol-Massenspektrometer 72 analysiert die auf nunmehr erhöhtem Vakuumniveau aber mit gleicher Gaszusammensetzung vorliegende Probe des Prüfraumes 5 und gibt ein Ergebnis aus, das den Gehalt an Testgas TG I liefert. Dieses Messergebnis der Konzentration des ersten Testgases TG I in dem Probengas des Prüfraumes 5 wird dazu verwendet, um festzustellen, ob etwas von dem mit hohem Druck im Testgasraum 4 eingebrachten Testgas-/ Druckluft-Gasgemisches durch die auf Dichtheit zu prüfende Autofelge 2 durch ein Leck in den Prüfraum 5 eingedrungen ist. Somit erhält man das Ergebnis, ob das Strukturbauteil, in diesem Fall eine Autofelge 2 an der entsprechend zu prüfenden Stelle die notwendige Dichtheit aufweist.

Auf Basis dieser Dichtheitsprüfung erfolgt die Sortierung der Autofelgen nach Status in Ordnung, falls keine Leckage vorgelegen hat, und nicht in Ordnung, falls eine Leckage vorgelegen hat.

Zur Vermeidung unnötiger Wartezeiten, hervorgerufen durch eine Leckage einer Autofelge 2 und einer dadurch hervorgerufenen Testgasverseuchung mit dem ersten Testgas TG I innerhalb der Testkammer 3, durch Spülen der Testkammer 3, kann nach einem Radwechsel durch entsprechende Umschaltung auf ein zweites Testgas TG II umgeschaltet werden und die nächste Dichtheitsprüfung sofort im Anschluss an den Radwechsel erfolgen.

Insbesondere ist es auch möglich, bereits vor der Testgaszuführung in den Testgasraum 4 eine Probe des Prüfraumes 5 zu ziehen und mit Hilfe der Probenstufe 71 und dem Sensorsystem 72 zu verarbeiten, wobei deren Analyse eine Verseuchung des Prüfraumes 5 mit dem Testgas TG I anzeigen würde und sofort noch vor dem Beginn der Testgasmischung auf ein anderes Testgas TG II umgeschaltet werden könnte. Hierdurch lassen sich Messfehler durch eine Testgasverseuchung effektiv verhindern.

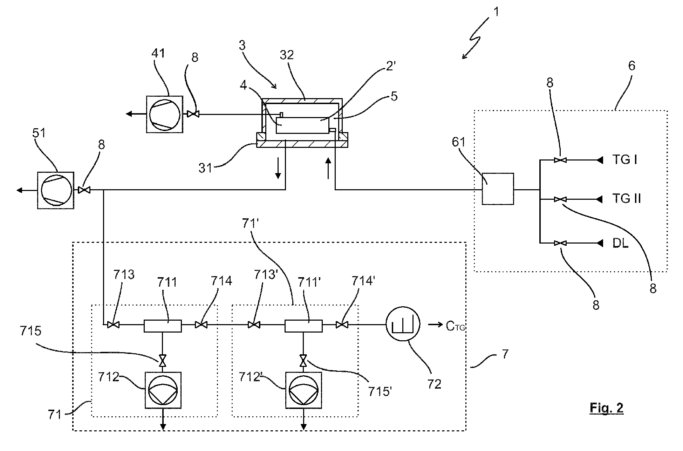

In Fig. 2 ist eine schematische Darstellung eines weiteren Ausführungs- und Anwendungsbeispiels der erfindungsgemäßen Dichtheitsprüfanordnung am Beispiel eines Kühlers bzw. Wärmetauschers gezeigt.

Es wird als Strukturbauteil bzw. als geschlossenes Objekt ein Kühler 2' auf Dichtheit getestet. Hierbei ist an einen der Zu- bzw. Ablaufstutzen die Testgas-Druckluft-Zuführung angeschlossen und der weiteren Zu- bzw. Ablaufstutzen ist hermetisch verschlossen bzw. dort ist die Vakuumleitung der Testgasraum-Vakuumanordnung 41 angeschlossen. Nunmehr bildet sich im Inneren des Kühlers 2' der Testgasraum 4 und im Außenbereich zwischen Kühler 2' und der Testkammer 3 bildet sich der Prüfraum 5 aus.

Selbstverständlich sind sämtliche Werkzeuge zum Abdichten des zu prüfenden Strukturbauteils zu der Testkammer 3 zu zählen.

Zudem sind in diesem Ausführungsbeispiel zwei Probenstufen 71 und 71' zur Verbesserung der Druckniveaus hintereinander geschaltet. Insbesondere wird an dieser Stelle nochmals auf den besonderen Umstand hingewiesen, dass weder Verunreinigungen, Verschmutzungen noch Ablagerungen die Funktionsweise beeinträchtigen können und zudem die Zusammensetzungen der Probengase zu jedem Zeitpunkt konstant ist.

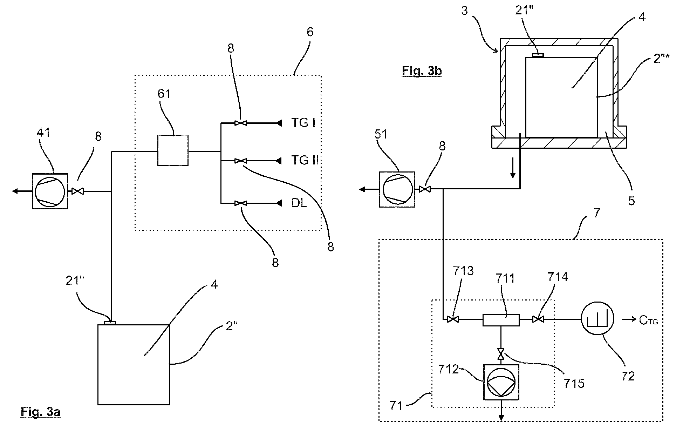

In Fig. 3a und 3b ist eine schematische Darstellung eines weiteren Ausführungs- und Anwendungsbeispiels der erfindungsgemäßen Dichtheitsprüfanordnung 1 am Beispiel eines Fasses 2" gezeigt, das samt dem dazugehörigen Deckel 21" als geschlossenes Fass 2"* auf Dichtheit geprüft werden soll, wobei zunächst das Fass 2" mit Druckluft und/oder Testgas befüllt (Fig. 3a) und anschließend mit dem zum Fass gehörigen Deckel 21" verschlossen wird. Im Anschluss daran wird das verschlossene und mit Druckluft und/oder Testgas befüllte Fass 2"* auf Dichtheit geprüft (Fig. 3b).

Die eigentliche Dichtheitsprüfanordnung 1 ist hierzu in zwei Teilabschnitte, entsprechend Fig. 3a und 3b, aufgesplittet worden, um auf diese Weise ein Endprodukt, beispielsweise ein Transportfass 2"* mit einem entsprechend dazugehörigen Fassdeckel 21" im Endzustand, also bei verschlossenem spezifischen Fassdeckel 21" auf Dichtheit zu prüfen.

In Fig. 3a wird hierzu das Fass 2" entsprechend evakuiert und mittels Druckluft DL und/oder Testgas TG I, TG II befüllt und nach dem Befüllen mit dem zum Fass 2" gehörenden Fassdeckel 21" verschlossen (2"*).

Das so vorbereitete Fass 2"* wird sodann in der Testkammer 3 entsprechend auf Dichtheit geprüft. Hierzu wird auf die vorherigen Ausführungsbeispiele verwiesen.

Das Befüllen des auf Dichtheit zu prüfenden Objektes mit Druckluft DL und/oder Testgas TG I, TG II kann auch in einer speziellen Atmosphäre erfolgen, so dass das Objekt in einer speziellen Kammer entsprechend gefüllt mit Druckluft DL und/oder Testgas TG I, TG II quasi gefüllt und anschließend auch dort verschlossen wird.

Im Sinne dieser Druckschrift sind ferner Arzneimittelverpackung und dgl. als geschlossene Verpackung 2", 2"* im Sinne des auf Dichtheit zu prüfenden Gegenstandes zu sehen. Derartige Arzneimittelverpackungen, beispielsweise Blister- oder Schweißverpackungen, Dosiersprays oder Langzeit-Medikamentverpackungen können während des Befüllens mit dem Medikament zusätzlich mit Druckluft DL und/oder Testgas TG I, TG II befüllt werden und nachdem Schließen bzw. Versiegeln auf Dichtheit geprüft werden. Hierdurch kann eine lange bzw. längere Haltbarkeit garantiert werden. Ebenso sind bei alleiniger Befüllung des versiegelten Innenraumes der Verpackung mit einem Testgas später Proben auf Dichtheit möglich.

Ferner sind auch Herzschrittmacher und andere vor der Anwendung bzw. Verwendung auf Dichtheit zu prüfende geschlossene Bauteile, Energiequellen und Geräte auf Dichtheit entsprechend dem Ausführungsbeispiel aus Fig. 3a, 3b prüfbar. Auf diese Weise kann die Dichtheit des Gerätes, beispielsweise eines im menschlichen Körper zu verbauenden Herzschrittmachers, gewährleistet werden.

Bei der Dichtheitsprüfung von medizinischen Geräten oder Arzneimittelverpackungen müssen selbstverständlich für den Körper und die Geräte bzw. Medikamente unschädliche Testgase verwendet werden, so dass bei der späteren Verwendung keine Schädigungen durch das Testgas entstehen können.

Im Sinne eines Strukturbauteils 2 bzw. einer geschlossenen Verpackung, eines geschlossenen Objekts bzw. Bauteils 2", 2"* sind aber auch Kälteleitungen, Druck- und Saugleitungen, Wärmetauschern, wie Kühlern und dgl., Pumpengehäusen, Stoßdämpfern sowie Federbeinen und Dämpfern, Kraftstofftanks, Ventilen, Motoren, Armaturen, Leuchtmitteln und dgl. sowie Luftfahrt-Bauteile zu verstehen, so dass auf diese Elemente ebenfalls die Anordnung bzw. das Verfahren angewandt werden können.

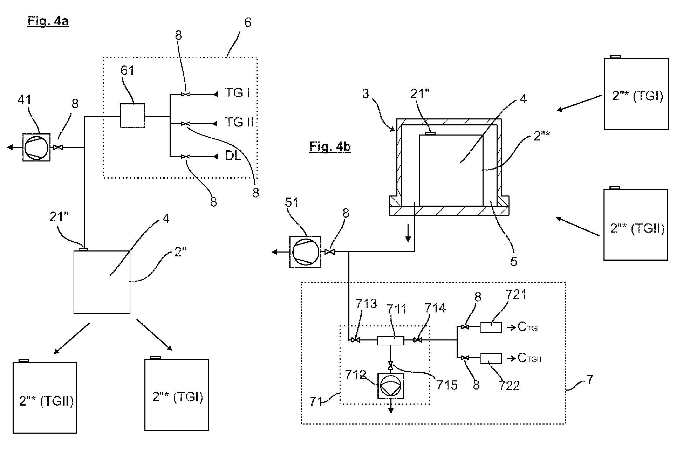

In Fig. 4a und 4b ist eine schematische Darstellung eines weiteren Ausführungs- und Anwendungsbeispiels der erfindungsgemäßen Dichtheitsprüfanordnung am Beispiel eines Fasses gezeigt, das samt einem zum spezifischen Fass dazugehörigen Deckel auf Dichtheit geprüft werden soll, wobei zunächst Fässer mit unterschiedlichen Testgasen gefüllt werden (Fig. 3a) und anschließend auf Dichtheit geprüft (Fig. 3b) werden, wobei die Fässer in Abhängigkeit einer etwaigen Verseuchung der Anlage zugeführt werden.

Zur generellen Ausführung wird auf die Figurenbeschreibung zu den zuvor dargestellten Figuren verwiesen.

Unterschiedlich ist zum Einen die Sensoranordnung des Sensorsystems 72, das in diesem Ausführungsbeispiel aus zwei einzelnen Sensoren, einem ersten Sensor 721 für das erste Testgas TGI und einem zweiten Sensor 722 für das zweite Testgas TGII, besteht.

Erfindungsgemäß können diese beiden Sensoren 721 und 722 sowohl gleichzeitig betrieben werden, um so eine etwaige Verseuchung des Untergrundes festzustellen bzw. zu detektieren, ob die Verseuchung wieder verschwunden ist, oder aber einzeln angesteuert werden, was durch die Ventile 8 erfolgen könnte.

Zum anderen ist weiter die Art der Handhabung und Befüllung der zu auf Dichtheit zu prüfenden Fässer, Verpackungen bzw. geschlossenen Objekte 2", 2"* unterschiedlich. In diesem Ausführungsbeispiel werden einige Objekte 2", 2"* bewusst von Anfang an mit dem zweiten Testgas TGII gefüllt, so dass zunächst die mit dem ersten Testgas TGI gefüllten Objekte 2", 2"* auf Dichtheit geprüft werden.

Jedoch beim Auftreten einer etwaigen Verseuchung sofort auf ein mit einem zweiten Testgas gefülltes Objekt 2", 2"* umgeschaltet werden kann, so dass die Dichtheitsprüfung fortgesetzt werden kann. Sobald die Verseuchung verschwunden ist, können wieder die mit dem ersten Testgas TGI gefüllten Objekte 2", 2"* geprüft werden.

**Bezugszeichenliste**

| | |
|---|---|
| 1 | Dichtheitsprüfanordnung |
| 2 | Strukturbauteil / Autofelge / Aluminiumrad |
| 2' | Kühler |
| 2" | Fass / Verpackung / Objekt |
| 2"* | Fass / geschlossene Verpackung / Objekt - gefüllt mit Testgas |
| 21" | Fassdeckel |
| 3 | Testkammer |
| 31 | untere Dichtplatte |
| 32 | obere Dichthülle |
| 33 | Dichtung |
| 4 | Testgasraum |
| 41 | Testgasraum-Vakuumanordnung |
| 5 | Prüfraum |
| 51 | Prüfraum-Vakuumanordnung |
| 6 | Testgaszuführung |
| 61 | TG/DL-Gasmischanordnung |
| 7 | Testgasmessanordnung |
| 71, 71' | Probenstufe |
| 711, 711' | Zwischenkammer |
| 712, 712' | Vakuumanordnung, Membranpumpe |
| 713, 713' | Prüfraum-seitiges Ventil |
| 714, 714' | Sensorsystem- / Quadrupol-Massenspektrometer-seitiges Ventil |
| 715, 715' | Vakuumanordnung-seitiges Ventil |
| 72 | Sensorsystem / Quadrupol-Massenspektrometer |
| 721 | erster Sensor |
| 722 | zweiter Sensor |
| 8 | steuerbares Ventil |
| C_{TG} | Konzentration Testgas |
| DL | Druckluft |
| TG I | erstes Testgas, He |
| TG II | zweites Testgas, CO₂ |

## Patentansprüche

1. Dichtheitsprüfanordnung (1) für die Prüfung eines Strukturbauteils (2, 2') oder einer geschlossenen Verpackung / Objekts (2"+21 ", 2"*) mit einer auf Dichtheit zu prüfenden Wandung, aufweisend:
- eine Testkammer (3), in der während der Dichtheitsprüfung das Strukturbauteil (2, 2') oder die Verpackung / Objekt (2"+21", 2"*) angeordnet ist;
- einen Testgasraum (4), der auf einer ersten Seite der Wandung des Strukturbauteils (2, 2') und der Testkammer (3) ausgebildet ist oder der dem Innenraum der Verpackung / des Objekts (2"+21", 2"*) entspricht;
- einen Prüfraum (5), der auf einer zweiten Seite der Wandung des Strukturbauteils (2, 2') und der Testkammer (3) ausgebildet ist oder zwischen Wandung der Verpackung / Objekt (2"+21 ", 2"*) und der Testkammer (3) ausgebildet ist;
- eine Testgaszuführung (6) zur Zuführung von Druckluft (DL) und/oder eines Testgases (TG) in den Testgasraum (5);
- eine Testgasmessanordnung (7) zur Messung oder Detektion des Testgases (TG) in dem Prüfraum (5) mit einem Sensorsystem (72);
- eine Prüfraum-Vakuumanordnung (51) zur Evakuierung des Prüfraumes (5);
**dadurch gekennzeichnet, dass**
die Testgasmessanordnung (7) zwischen dem Prüfraum (5) und dem Sensorsystem (72) eine Probenstufe (71) mit
- einer Zwischenkammer (711),
- einem zwischen der Zwischenkammer (711) und dem Prüfraum (5) angeordneten Prüfraum-seitigen Ventil (713),
- einem zwischen der Zwischenkammer (711) und dem Sensorsystem (72) angeordneten Sensorsystem-seitigen Ventil (714),
- einer an die Zwischenkammer (711) angeschlossene
Vakuumanordnung (712) zur Evakuierung der Zwischenkammer (711) und
- einem zwischen der Zwischenkammer (711) und der Vakuumanord nung (712) angeordneten Vakuumanordnung-seitigen Ventil (715) aufweist.

2. Dichtheitsprüfanordnung (1) nach Anspruch 1,
**dadurch gekennzeichnet, dass**
das Volumen der Zwischenkammer (711) mit der Größe des Prüfraumes (5) korreliert, wobei das Volumen der Zwischenkammer (711) im Bereich von 1 bis 1000 cm³, insbesondere im Bereich von 1 bis 150 cm³ liegt.

3. Dichtheitsprüfanordnung (1) nach Anspruch 1 oder 2,
**dadurch gekennzeichnet, dass**
das Sensorsystem (72) ein Massenspektrometer, insbesondere ein Quadrupol-Massenspektrometer (72) und/oder mindestens zwei einzelne Testgassensoren aufweist, wobei das Sensorsystem der Testgasmessanordnung (7) mindestens zwei Testgase (TG I und TGII) detektieren kann.

4. Dichtheitsprüfanordnung (1) nach Anspruch 1, 2 oder 3,
**dadurch gekennzeichnet, dass**
die Vakuumanordnung (712) eine Membranpumpe, eine Drehschieberpumpe, und/oder eine Turbomolekularpumpe ist.

5. Dichtheitsprüfanordnung (1) nach einem der vorangehenden Ansprüche, **dadurch gekennzeichnet, dass**
zwischen dem Sensorsystem-seitigen Ventil (714) der Zwischenkammer (711) und dem Sensorsystem (72) mindestens eine Vakuumerhöhungsstufe angeordnet ist, wobei der Druck der im Sensorsystem (72) zu untersuchenden Gasprobe des Prüfraumes (5) weiter verringert wird.

6. Dichtheitsprüfanordnung (1) nach einem der vorangehenden Ansprüche,
**dadurch gekennzeichnet, dass**
die Testgaszuführung (6) mit mindestens zwei unterschiedlichen Testgasen (TG I, TG II) beaufschlagbar ist, wobei entweder das erste Testgas (TG I), das zweite Testgas (TG II) oder eine Kombination aus dem ersten (TG I) und dem zweiten Testgas (TG II) nutzbar ist.

7. Dichtheitsprüfanordnung (1) nach einem der vorangehenden Ansprüche,
**dadurch gekennzeichnet, dass**
das Testgas (TG I, TG II) bevorzugt Wasserstoff (H²), Helium (HE) und/oder Kohlenstoffdioxid (CO²) ist/sind.

8. Dichtheitsprüfanordnung (1) nach einem der vorangehenden Ansprüche, **dadurch gekennzeichnet, dass**
eine Testgasraum-Vorbereitungsanordnung zur Vorbereitung des Testgasraumes (4) zur Aufnahme von Druckluft (DL) und/oder Testgases (TG I, TG II) vorgesehen ist, wobei
- die Testgasraum-Vorbereitungsanordnung eine Testgasraum-Vakuumanordnung (41) zum Evakuieren des Testgasraumes (4) im Falle der Dichtheitsprüfung eines Strukturbauteils (2, 2')
oder
- ein Vorbereitungsabschnitt, bevorzugt mit einer kontrollierten Atmosphäre, im Falle einer auf Dichtheit zu prüfenden geschlossenen Verpackung / Objekt (2"+21 ", 2"*) ist.

9. Dichtheitsprüfanordnung (1) nach einem der vorangehenden Ansprüche,
**dadurch gekennzeichnet, dass**
eine Mischanordnung (61) zur Mischung des / der Testgase (TGI, TGII) mit Druckluft (DL) vor oder in dem Testgasraum (4) vorgesehen ist, wobei in der Mischanordnung (61) Mittel zur homogenen Mischung des Testgases (TG I, TG II) mit der Druckluft vorgesehen sind.

10. Dichtheitsprüfanordnung (1) nach einem der vorangehenden Ansprüche,
**dadurch gekennzeichnet, dass**
die Testgaszuführung (6) mindestens drei einzelne Einbringmittel aufweist, die direkt in den Testgasraum (4) eindringend oder dort angeordnet sind, wobei ein erstes Einbringmittel mit Druckluft (DL), ein zweites Einbringmittel mit einem ersten Testgas (TG I) und ein drittes Einbringmittel mit einem zweiten Testgas (TG II) beaufschlagbar ist.

11. Dichtheitsprüfverfahren für die Prüfung eines Strukturbauteils (2, 2') oder einer Verpackung / Objekts (2"+21 ", 2"*) mit einer Dichtheitsprüfanordnung (1) nach einem der vorangehenden Ansprüche, umfassend die Schritte:
1) Evakuieren der Zwischenkammer (711) bei geschlossenem Prüfraum-seitigen Ventil (713) und Sensor-seitigen Ventil (714) durch die Vakuumanordnung (712) bei geöffnetem Vakuumanordnung-seitigen Ventil (715),
wobei in zeitlicher Überschneidung hierzu erfolgt:
2A) im Falle der Dichtheitsprüfung einer Wandung eines Strukturbauteils (2, 2'):
a) Positionieren des Strukturbauteils (2,2') bei offener Testkammer (3);
b) Schließen der Testkammer (3) und Abdichten des Strukturbauteils (2, 2'), so dass sich der Testgasraum (4) und der Prüfraum (5) ausbilden;
c) Evakuieren des Prüfraums (5) und des Testgasraums (4);
d) Mischen und Einleiten eines Gasgemisches umfassend Druckluft (DL) und/oder ein Testgas (TG I, TG II) in den Testgasraum (4);
oder
2B) im Falle der Dichtheitsprüfung einer geschlossenen Verpackung /eines geschlossenen Objekts (2"+21 ", 2"*):
a) Vorbereiten des Testgasraumes (4) durch Befüllen des Innen raumes der geschlossenen Verpackung / Objekts (2"+21 ", 2"*) als Testgasraum (4) mit Druckluft (DL) und/oder Testgas (TG I, TG II)
b) Positionieren der geschlossenen und mit Druckluft (DL) und/oder Testgas (TG I, TG II) befüllten Verpackung / Objekts (21"*) bei offener Testkammer (3);
c) Schließen der Testkammer (3), so dass sich der Prüfraum (5) ausbildet;
d) Evakuieren des Prüfraums (5);
3) Schließen des Vakuumanordnung-seitigen Ventils (715) und anschließendes Ziehen einer Probe aus dem Prüfraum (5) über das Druckgefälle eines Teils der Gasprobe durch
kurzzeitiges Öffnen und anschließendes Schließen des Prüfraum-seitigen Ventils (713);
4)
a) Freigeben eines Teils der oder der in der Zwischenkammer (711) befindlichen Gasprobe des Prüfraumes (5) an das Sensorsystem (72) über das Druckgefälle durch Öffnen des Sensorsystem-seitigen Ventils (714) während des Analysierens der Gasprobe durch das Sensorsystem (72) und Bewertung der Dichtheit des Strukturbauteils (2, 2') oder der geschlossenen Verpackung / Objekts (2"+21", 2"*);
und
b) in zeitlicher Überschneidung Belüften der Testkammer (3) zur Neubestückung mit dem nächsten Strukturbauteil (2, 2') durch Entfernen des Strukturbauteils (2, 2') oder der geschlossenen Verpackung / Objekts (2"+21 ", 2"*).

12. Dichtheitsprüfverfahren nach Anspruch 11,
**dadurch gekennzeichnet, dass**
die Öffnungszeit des Prüfraum-seitigen Ventils (713) [ Schritt 3 ] und/oder des Sensorsystem-seitigen Ventils (714) [ Schritt 4)a) ] durch kurzzeitiges Öffnen und anschließendes Schließen im Bereich von 0,1 bis 9 Sekunden liegt, insbesondere 0,5 bis 2 Sekunden beträgt.

13. Dichtheitsprüfverfahren nach Anspruch 11 oder 12,
**dadurch gekennzeichnet, dass**
nach dem Verfahrensschritt 2A) c) oder 2B) d) zunächst das Schließen des Vakuumanordnung-seitigen Ventils (715) und anschließend das Ziehen einer Probe aus dem Prüfraum (5) durch kurzzeitiges Öffnen und anschließendes Schließen des Prüfraum-seitigen Ventils (713) erfolgt [ Schritt 3 ],
wobei
im Anschluss durch Freigeben eines Teils der oder der in der Zwischenkammer (711) befindlichen Gasprobe des Prüfraumes (5) an das Sensorsystem (72) über das Druckgefälle durch Öffnen des Sensorsystem-seitigen Ventils (714) [ Schritt 4)a) ] eine Gasanalyse der Gasprobe aus dem Prüfraum (5) durch das Sensorsystem (72) auf Verseuchung mit dem Testgas (TG I) aus der vorherig durchgeführten Dichtheitsprüfung untersucht wird,
wobei
bei der Detektion einer Verseuchung des Prüfraumes (5) mit dem ersten Testgas (TG I) eine Umschaltung der Testgaszuführung (6) auf ein zweites Testgas (TG II) oder eine Kombination (TG I + TG II) aus dem ersten und zweiten Testgas erfolgt.

14. Dichtheitsprüfverfahren nach Anspruch 13,
**dadurch gekennzeichnet, dass**
nach dem Wechsel des Testgases (TG I zu TG II) das erste Testgas (TG I) weiterhin detektiert wird, wobei bei Unterschreitung einer Verseuchungsgrenze des ersten Testgases (TG I) erneut auf das erste Testgas (TG I) umgeschaltet wird.

15. Dichtheitsprüfverfahren nach einem der Ansprüche 13 oder 14,
**dadurch gekennzeichnet, dass**
während der Prüfung auf eine Testgasverseuchung eine Kompensation des Untergrundes im Prüfraum (5) erfolgt.
